# EUROPEAN PATENT SPECIFICATION

(11) **EP 2 628 782 B1**
(45) Date of publication and mention of the grant of the patent: **07.09.2016**
(21) Application number: 11832578.6
(22) Date of filing: 05.10.2011
(51) Int. Cl.: C11B 13/00, A23D 9/02, C11B 3/06, C11B 3/10

(54) **DEOXIDIZING AGENT FOR EDIBLE OILS, AND METHOD FOR REGENERATION OF USED EDIBLE OIL USING SAME**
DEOXIDATIONSMITTEL FÜR SPEISEÖLE SOWIE VERFAHREN ZUR REGENERATION VON ALTSPEISEÖLEN DAMIT
AGENT DÉSOXYDANT POUR HUILES ALIMENTAIRES ET PROCÉDÉ DE RÉGÉNÉRATION D'HUILE ALIMENTAIRE USÉE L'UTILISANT

(30) Priority: 06.09.2011 JP 2011193608; 19.10.2010 JP 2010234189; 13.10.2010 JP 2010230266
(43) Date of publication of application: 21.08.2013
(73) Proprietor: Kyowa Chemical Industry Co., Ltd, Takamatsu-shi, Kagawa 761-0113 (JP)
(72) Inventor: TACHIFUJI, Tomoko, Sakaide-shi Kagawa 762-0012 (JP)
(74) Representative: Raynor, Stuart Andrew
(86) International application number: PCT/JP2011/073465
(87) International publication number: WO 2012/050144

(56) References cited:
- EP-A1- 1 186 343
- EP-A1- 1 475 351
- JP-A- 6 254 388
- JP-A- 2001 335 793
- JP-A- 2001 335 793
- JP-A- 2008 174 674
- JP-A- 2010 163 569

## Description

### TECHNICAL FIELD

The present invention relates to a deoxidizing agent for edible oils and a method of regenerating a used edible oil.

### BACKGROUND ART

Since an edible oil used to cook fried food at home and in the restaurant industry and the food industry deteriorates every time its use, it is generally discarded or exchanged regularly. In contrast to this, a drive to regenerate a used edible oil so as to recycle it is spreading in order to reduce environmental load and cooking costs.

Effects required for agents for regenerating an used edible oil are roughly divided into two. One of them is a deoxidizing effect for converting a free fatty acid produced by deterioration into a compound hardly soluble in oils and fats and removing it, and the other is a decolorizing effect for adsorbing coloring matter from a deteriorated edible oil which has turned brownish and removing it to return the color of the deteriorated edible oil to almost that of a new oil. For the regeneration of an edible oil, as deoxidizing agents, there are known calcium oxide, calcium hydroxide, calcium silicate, magnesium oxide, magnesium hydroxide and magnesium silicate (some of these are mentioned e.g. in Patent Document 7). As decoloring agents, there are known silicon oxide, acid earth, activated earth, aluminum silicate, aluminum hydroxide and activated carbon (Patent Document 1, Patent Document 2, Patent Document 3, Patent Document 4 and Patent Document 5).

A reaction between the above deoxidizing agent and the free fatty acid contained in the edible oil is a reaction between an acid and a solid base. In this case, as the specific surface area of the deoxidizing agent becomes larger, the contact area with the acid increases naturally, whereby it is expected that the deoxidizing rate and the deoxidizing capability become advantageous. In Patent Document 2 and Patent Document 3, an inorganic porous material having a large specific surface area such as silicon oxide is immersed in a magnesium aqueous solution or a calcium aqueous solution, dried and then baked to increase the specific surface area of the deoxidizing agent. However, since the deoxidizing agent synthesized by this method has a low content of the solid base, its theoretical deoxidization capacity per unit weight becomes small.

Although the deoxidization of an edible oil is carried out by using magnesium hydroxide in Patent Document 5, it is merely stated that the purity of magnesium hydroxide is 97 wt% or more, and this magnesium hydroxide is commercially available high-purity magnesium hydroxide itself.

An idea that magnesium hydroxide particles having a large BET specific surface area might be obtained by adding a divalent anion which would curb the crystal growth of magnesium hydroxide particles in the step of,producing magnesium hydroxide particles occurred to an inventor of the present invention. She found that carbonate group-containing magnesium hydroxide particles having a larger BET specific surface area than that of conventional magnesium hydroxide particles were obtained when a magnesium salt solution was reacted with an alkaline substance in the presence of a CO₃ ion based on this idea, and proposed the carbonate group-containing magnesium hydroxyde particles previously. The carbonate group-containing magnesium hydroxide has a BET specific surface area of 80 m²/g or more, possibly 200 m²/g or more (Patent Document 6).
(Patent Document 1) JP-A 2-307526
(Patent Document 2) JP-A 2006-241245
(Patent Document 3) JP-A 2006-334221
(Patent Document 4) JP-A 2007-143525
(Patent Document 5) JP-A 2010-163569
(Patent Document 6) WO2008/123566
(Patent Document 7) JP-A-2001-335793

### DISCLOSURE OF THE INVENTION

It is an object of the present invention to provide a deoxidizing agent for edible oils having an excellent deoxidizing effect and a method of regenerating a used edible oil by using the same.

When the inventor conducted intensive studies to solve the above problem, she found that carbonate group-containing magnesium hydroxide having a large BET specific surface area or a baked product thereof has an extremely great deoxidizing effect as compared with conventional magnesium hydroxide or magnesium oxide. The present invention was accomplished based on this finding. The invention includes the following inventions.
1. A deoxidizing agent for edible oils having an average particle diameter of 50 to 1,000 µm and comprising granulated particle,
   wherein the granulated particle is obtained by granulating carbonate group-containing magnesium hydroxide particles or baked particles thereof,
   wherein the carbonate group-containing magnesium hydroxide particles are represented by the following formula (1) and have a BET specific surface area of 80 to 400 m²/g:

   Mg(OH)₂₋ₓ(CO₃)0.5x · mH₂O (1)

   wherein x satisfies 0.02 ≦ x ≦ 0.7 and
   m satisfies 0 ≦ m ≦ 1.
2. The deoxidizing agent for edible oils in the above paragraph 1, wherein the baking temperature of the baked particles is 350 to 900°C.
3. The deoxidizing agent for edible oils in the above paragraph 1, wherein the baking temperature of the baked particles is 400 to 800°C.
4. The deoxidizing agent for edible oils in the above paragraph 1, wherein the BET specific surface area of the baked particles is 30 to 500 m²/g.
5. The deoxidizing agent for edible oils in the above paragraph 1, wherein the BET specific surface area of the baked particles is 100 to 400 m²/g.
6. The deoxidizing agent for edible oils in the above paragraph 1, wherein the granulated particle further comprises at least one compound selected from the group consisting of calcium oxide, calcium hydroxide, calcium silicate, magnesium oxide, magnesium hydroxide and magnesium silicate.
7. The deoxidizing agent for edible oils in the above paragraph 1, wherein the granulated particle further comprises a decoloring agent.
8. The deoxidizing agent for edible oils in the above paragraph 7, wherein the decoloring agent is at least one compound selected from the group consisting of silicon dioxide, acid earth, activated earth, aluminium silicate, aluminum hydroxide and activated carbon.
9. A method of regenerating an used edible oil, comprising bringing the used edible oil into contact with the deoxidizing agent for edible oils of the above paragraphs 1 to 8 at 200°C or lower.
10. Use of the deoxidizing agent for edible oils of the above, paragraph 1 to regenerate an edible oil.

### BRIEF DESCRIPTION OF THE DRAWINGS

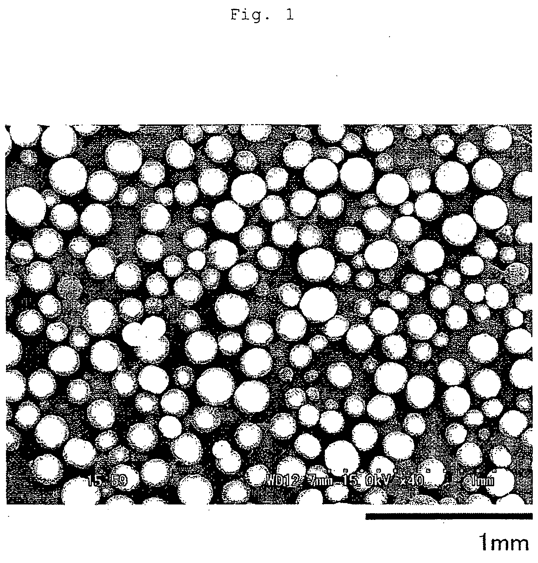

Fig. 1 shows a SEM photograph of the deoxidizing agent granulated product (Example 3) of the present invention;

### BEST MODE FOR CARRYING OUT THE INVENTION

### <deoxidizing agent for edible oils>

### (carbonate group-containing magnesium hydroxide)

The deoxidizing agent for edible oils of the present invention comprises carbonate group-containing magnesium hydroxide particles represented by the following formula (1) or baked particles thereof. The main component of the deoxidizing agent for edible oils is carbonate group-containing magnesium hydroxide particles represented by the formula (1) or baked particles thereof. The deoxidizing agent for edible oils may consist of carbonate group-containing magnesium hydroxide particles or baked particles thereof but may comprise other additives.

The carbonate group-containing magnesium hydroxide is represented by the following formula (1).

Mag (OH)₂₋ₓ(CO₃)_{0.5x}·mH₂O (1)

In the above formula, x satisfies 0.02 ≦ x ≦ 0.7, preferably 0.04 ≦ x ≦ 0.6, more preferably 0.06 ≦ x ≦ 0.3.

In the formula, m satisfies 0 ≦ m ≦ 1, preferably 0 ≦ m ≦ 0.6, more preferably 0 ≦ m ≦ 0.4.

The lower limit of the BET specific surface area of each of the carbonate group-containing magnesium hydroxide particles is 80 m²/g, preferably 100 m²/g, more preferably 120 m²/g. The upper limit of the BET specific surface area is 400 m²/g, preferably 350 m²/g, more preferably 300 m²/g.

The carbonate group-containing magnesium hydroxide can be produced by reacting a water-soluble magnesium salt with an alkali metal hydroxide or ammonia water in water in the presence of a carbonate. Examples of the water-soluble magnesium salt include magnesium sulfate, magnesium chloride, magnesium nitrate and magnesium acetate. Examples of the alkali metal hydroxide include sodium hydroxide and potassium hydroxide. Ammonia water may be used in place of the alkali metal hydroxide. Examples of the carbonate include sodium carbonate, sodium bicarbonate, potassium carbonate, potassium bicarbonate and ammonium carbonate.

The reaction temperature is preferably 5 to 60°C. The reaction time is preferably 3 to 180 minutes. Cleaning is preferably cleaning by passing water in an amount 5 to 50 times the weight of a solid or emulsification cleaning. The drying temperature is preferably 90 to 350°C.

Carbonate group-containing magnesium hydroxide having a large BET specific surface area can be obtained by reacting a water-soluble magnesium salt with an alkali metal hydroxide or ammonia water in the presence of a carbonate to curb the crystal growth of magnesium hydroxide.

### (baked particles)

The inventor also found that baked particles having a BET specific surface area of 30 to 500 m²/g obtained by baking the carbonate group-containing magnesium hydroxide particles represented by the formula (1) at 350 to 900°C have a greater deoxidizing effect than conventional magnesium oxide particles. The baking temperature is preferably 400 to 800°C, more preferably 450 to 700°C. Baking may be carried out in the atmosphere or in vacuum.

The BET specific surface area of each of the baked particles is preferably 30 to 500 m²/g, more preferably 100 to 400 m²/g.

When the baking temperature is 350 to 400°C, each of the baked particles becomes a mixture of a carbonate group-containing magnesium hydroxide and a magnesium oxide particle. When the baking temperature is 450°C or higher, the baked particle becomes a magnesium oxide particle completely.

### (granulated product)

The carbonate group-containing magnesium hydroxide particles and baked particles thereof have such excellent granulating property due to their large BET specific surface areas that a granulated product having high granulation strength can be obtained by spray drying or the like without adding a binder.

The average particle diameter of the granulated product is 50 to 1,000 µm, preferably 100 to 900 µm, more preferably 150 to 800 µm.

As means of granulation, extrusion granulation in which a dehydrated cake or the product obtained by kneading dried powder after adding water is pressed against a mesh having a certain size to be let pass therethrough forcedly and dry granulation in which dry powders are compression molded and the molded product is ground and classified may be employed besides granulation by spray drying. However, since large pressure is applied for granulation in the extrusion granulation and the dry granulation, the number of spaces in the granulated particle is reduced and the BET specific surface area is slightly reduced. In this respect, a spray granulated product retains spaces in the granulated particles and can deoxidize an edible oil effectively.

These granulated products do not collapse even when they are baked and do not powder in an edible oil. Although the filtration performance of the deoxidizing agent has a great effect on work efficiency when the deoxidizing agent and the regenerated oil are separated from each other by filtration after the deoxidization of an edible oil, a granulated product of the deoxidizing agent of the present invention has a high filtration speed and excellent work efficiency.

Therefore, the present invention includes a deoxidizing agent for edible oils having an average particle diameter of 50 to 1,000 µm and comprising granulated carbonate group-containing magnesium hydroxide particles or baked particles of the granulated carbonate group-containing magnesium hydroxide particles, wherein the carbonate group-containing magnesium hydroxide particles are as defined herein.

### (deoxidizing agent, another deoxidizing agent)

The deoxidizing agent for edible oils of the present invention may comprise a decoloring agent in addition to the carbonate group-containing magnesium hydroxide particles or baked particles thereof. When the deoxidizing agent comprises both, it can produce an excellent deoxidizing effect and an excellent decoloring effect at the same time. The decoloring agent is at least one compound selected from the group consisting of silicon dioxide, acid earth, activated earth, aluminum silicate, aluminum hydroxide and activated carbon. The content of the decoloring agent is not particularly limited but preferably 10 to 2,000 parts by weight, more preferably 50 to 1,000 parts by weight based on 100 parts by weight of the carbonate group-containing magnesium hydroxide particles or baked particles thereof.

The deoxidizing agent for edible oils of the present invention may comprise another deoxidizing agent in addition to the carbonate group-containing magnesium hydroxide particles or baked particles thereof. The deoxidizing agent is at least one selected from the group consisting of calcium oxide, calcium hydroxide, calcium silicate, magnesium oxide, magnesium hydroxide and magnesium silicate.

### <method of regenerating an edible oil>

A used edible oil heated at 200°C or lower can be regenerated by bringing it into contact with the deoxidizing agent of the present invention like known deoxidizing agents. The amount of the deoxidizing agent of the present invention is preferably 0.05 to 20 parts by weight, more preferably 0.1 to 10 parts by weight, much more preferably 0.2 to 5 parts by weight based on 100 parts by weight of the edible oil.

The method of bringing the edible oil into contact with the deoxidizing agent is not particularly limited but the following methods are employed.

After the deoxidizing agent of the present invention is directly added to a used edible oil and stirred, the deoxidizing agent and the regenerated oil are separated from each other by sedimentation. After the deoxidizing agent of the present invention is directly added to a used edible oil and stirred, the deoxidizing agent and the regenerated oil are separated from each other by filtration.. After the deoxidizing agent of the present invention is directly added to a used edible oil and stirred, the deoxidizing agent and the regenerated oil are separated from each other by centrifugation. A filter paper or filter fabric bag filled with the deoxidizing agent of the present invention is injected into a used edible oil and taken out after a certain time. A filter is manufactured by charging filter paper or filter fabric with the deoxidizing agent of the present invention, and a used edible oil is let pass through the filter.

The present invention includes the use of the deoxidizing agent for edible oils for the regeneration of an edible oil.

### Examples

The following examples are provided for the purpose of further illustrating the present invention but are in no way to be taken as limiting.

### Example 1 (Reference Example)

About 23.4 liters of slurry obtained by carrying out a continuous injection reaction between 12 liters of a 1.5 mol/L magnesium chloride aqueous solution and 11.4 liters of a 3.0 N alkali mixed solution (NaOH: Na₂CO₃ = 18:1) for a residence time of 10 minutes under agitation at room temperature was filtered, and the filtrate was cleaned by passing 21 liters of water, dehydrated and dried at 105°C with a shelf type drier for 18 hours. The dried product was ground and let pass through a metal net having an opening of 150 µm to obtain a deoxidizing agent consisting of carbonate group-containing magnesium hydroxide particles having a BET specific surface area of 251 m²/g and represented by the following formula.

Mg(OH)_{1.80}(CO₃)_{0.10}· 0.10H₂O

### Example 2 (Reference Examples)

A deoxidizing agent having a BET specific surface area of 298 m²/g was obtained by baking the carbonate group-containing magnesium hydroxide particles of Example 1 at 400°C for 2 hours. Its X-ray diffraction image shows that this was a mixture of magnesium hydroxide and magnesium oxide.

### Example 3

About 23.4 liters of slurry obtained by carrying out a continuous injection reaction between 12 liters of a 1.5 mol/L magnesium chloride aqueous solution and 11.4 liters of a 3.0 N alkali mixed solution (NaOH: Na₂CO₃ = 18:1) for a residence time of 10 minutes under agitation at room temperature was filtered, and the filtrate was cleaned by passing 21 liters of water and emulsified with water to prepare 10 liters of an emulsified product. The obtained product was spray dried to obtain a spherical deoxidizing agent consisting of carbonate group-containing magnesium hydroxide particles having an average particle diameter of 166 µm and a BET specific surface area of 262 m²/g and represented by the following formula.

Mg(OH)1.80(CO₃)_{0.10}·0.18H₂O

### Example 4

A spherical deoxidizing agent having a BET specific surface area of 296 m²/g was obtained by baking the carbonate group-containing magnesium hydroxide spherical particles of Example 3 at 400°C for 2 hours. Its X-ray diffraction image shows that this was a mixture of magnesium hydroxide and magnesium oxide.

### Example 5

A spherical deoxidizing agent having a BET specific surface area of 268 m²/g was obtained by baking the carbonate group-containing magnesium hydroxide spherical particles of Example 3 at 500°C for 2 hours. Its X-ray diffraction image shows that this was magnesium oxide.

### Example 6

A spherical deoxidizing agent having a BET specific surface area of 102 m²/g was obtained by baking the carbonate group-containing magnesium hydroxide spherical particles of Example 3 at 700°C for 2 hours. Its X-ray diffraction image shows that this was magnesium oxide.

### Comparative Example 1

Magnesium hydroxide particles (Trade name: KISUMA SD) of Kyowa Chemical Industry Co., Ltd. were used as a deoxidizing agent. It had a BET specific surface area of 32 m²/g.

### Comparative Example 2

Magnesium hydroxide particles (Trade name :
KyowasuimaguF) of Kyowa Chemical Industry Co. , Ltd. were used as a deoxidizing agent. It had a BET specific surface area of 58 m²/g.

### Comparative Example 3

Magnesium oxide granules (Trade name: Maika) of Kyowa Chemical Industry Co., Ltd. were used as a deoxidizing agent. It had a BET specific surface area of 25 m²/g.

### Comparative Example 4

Hydrotalcite particles (Trade name: KYOWAAD 500SH) of Kyowa Chemical Industry Co., Ltd. were used as a deoxidizing agent. It had a BET specific surface area of 102 m²/g.

The deoxidizing agents of the above Examples 1 to 6 and Comparative Examples 1 to 4 were analyzed by the following methods.
(1) Magnesium (Mg); chelate titration method
(2) Carbonic acid (CO₂); JIS R9101 sodium hydroxide solution-hydrochloric acid titration method
(3) Drying loss (H₂O); JSPI (Japanese Standard Pharmaceutical Ingredients), drying loss
(4) BET specific surface area; liquid nitrogen adsorption apparatus (NOVA2000 of Yuasa Ionics Co., Ltd.)
(5) X-ray structural analysis; automatic X-ray diffraction apparatus (RINT2200V of Rigaku Corporation)

### <deoxidizing tests>

Deoxidizing tests were made on the above Examples 1 to 6 and Comparative Examples 1 to 4 by the following methods.

### Deoxidizing test-1 deoxidization of used edible canola oil

A predetermined amount of a deoxidizing agent sample was added to 50 g of an used edible canola oil (acid value ≒ 1.5) heated up to 180°C and left at room temperature for 10 minutes without stirring it. Thereafter, the acid value of the regenerated oil obtained by filtration was measured with AV Tester Simple Pack (for the measurement of the deterioration of an oil or fat, manufactured by Sibata Scientific Technology Ltd.). The AV Tester Simple Pack is a test kit capable of measuring the acid value of an oil or fat easily and determines the acid value by color comparison with an accessory standard color chart. The colors of the standard color chart are shown below, and the test results are shown in Table 1.

| | | |
|---|---|---|
| AV1 Tester: | acid value of 0.5 or less | blue |
| | acid value of 1.0 | green |
| | acid value of 1.5 or more | yellow |
| AV2 Tester: | acid value of 1.5 or less | blue |
| | acid value of 2.0 | green |
| | acid value of 2.5 or more | yellow |
| AV3 Tester: | acid value of 2.5 or less | blue |
| | acid value of 3.0 | green |
| | acid value of 3.5 or more | yellow |

**Table 1**

| | Amount of deoxidizing agent | AV2 tester color/ judgment | AV1 tester color/ judgment | Total judgment of acid value |
|---|---|---|---|---|
| No addition | 0.0g | Blue/1.5≧ | Yellow/1.5 ≦ | 1.5 |
| Example 1 (Reference Example) | 2.0g | Blue/1.5≧ | Blue/1.5≧ | 0.5≧ |
| | 1.0g | Blue/1.5≧ | Blue/1.5≧ | 0.5≧ |
| | 0.5g | Blue/1.5≧ | Blue-green/ 0.5-1.0 | 0.5-1.0 |
| | 0.2g | Blue/1.5≧ | Green/1.0 | 1:0 |
| | 0.1g | Blue/1.5≧ | Yellow-green/ 1.0-1.5 | 1.0-1.5 |
| Example 2 (Reference Example) | 2.0g | Blue/1.5≧ | Blue/1.5≧ | 0.5≧ |
| | 1.0g | Blue/1.5≧ | Blue/1.5≧ | 0.5≧ |
| | 0.5g | Blue/1.5≧ | Blue/1.5≧ | 0.5≧ |
| | 0.2g | Blue/1.5≧ | Blue/1.5≧ | 0.5≧ |
| | 0.1g | Blue/1.5≧ | Blue/1.5≧ | 0.5≧ |
| | 0.05g | Blue/1.5≧ | Green/1.0 | 1.0 |
| | 0.02g | Blue/1.5≧ | Yellow-green/ 1.0-1.5 | 1.0-1.5 |
| Example 3 | 2.0g | Blue/1.5≧ | Blue/1.5≧ | 0.5≧ |
| | 1.0g | Blue/1.5≧ | Blue-green 0.5-1.0 | 0.5-1.0 |
| | 0.5g | Blue/1.5≧ | Green/1.0 | 1.0 |
| | 0.2g | Blue/1.5≧ | Yellow-green 1.0-1.5 | 1.0-1.5 |
| Example 4 | 2.0g | Blue/1.5≧ | Blue/1.5≧ | 0.5≧ |
| | 1.0g | Blue/1.5≧ | Blue/1.5≧ | 0.5≧ |
| | 0.5g | Blue/1.5≧ | Blue-green/ 0.5-1.0 | 0.5-1.0 |
| | 0.2g | Blue/1.5≧ | Green/1.0 | 1.0 |
| | 0.1g | Blue/1.5≧ | Yellow-green/ 1.0-1.5 | 1.0-1.5 |
| C.Ex. 1 | 2.0g | Blue/1.5≧ | Green/1.0 | 1.0 |
| | 1.0g | Blue/1.5≧ | Yellow-green/ 1.0-1.5 | 1.0-1.5 |
| C.Ex. 2 | 2.0g | Blue/1.5≧ | ^{.}Blue/1.5≧ | 0.5≧ |
| | 1.0g | Blue/1.5≧ | Green/1.0 | 1.0 |
| | 0.5g | Blue/1.5≧ | Yellow-green/ 1.0-1.5 | 1.0-1.5 |
| C.Ex. 3 | 2.0g | Blue/1.5≧ | Green/1.0 | 1.0 |
| | 1.0g | Blue/1.5≧ | Yellow-green/ 1.0-1.5 | 1.0-1.5 |

| | | | | |
|---|---|---|---|---|
| C.Ex.: Comparative Example | | | | |

As shown in Table 1, in the deoxidizing test of the used edible canola oil in which stirring was not carried out, in Comparative Examples 1 to 3, 1.0 to 2.0 g of the deoxidizing agent was required to reduce the acid value of 50 g of the oil having an acid value of 1.5 to 1. In Examples 1 to 4, the acid value could be reduced to 1 by using 0.05 to 0.5 g of the deoxidizing agent. As compared with Comparative Examples 1 to 3, Examples 1 to 4 exhibited an excellent deoxidizing effect with a small amount when there was no dispersion by stirring.

### Deoxidizing test-2 deoxidization of model oil (edible canola oil whose acid value has been controlled)

Oleic acid was added to an unused edible canola oil to prepare a model oil having an acid value of 2.5. 0.5 g of the deoxidizing agent sample was added to 50 g of the model oil heated up to 150°C, stirred for 1 minute and left at room temperature for 1 hour. Thereafter, the acid value of the regenerated oil obtained by filtration was measured with the AV Tester Simple Pack. The test results are shown in Table 2.

**Table 2**

| | AV3 tester color/ judgment | AV2 tester color/ judgment | AV1 tester color/ judgment | Total judgment of acid value |
|---|---|---|---|---|
| No addition | Blue/2.5≧ | Yellow 2.5≦ | Yellow 1.5≦ | 2.5 |
| Example 1* | Blue/2.5≧ | Blue/1.5≧ | Blue/0.5≧ | 0.5≧ |
| Example 2* | Blue/2.5≧ | Blue/1:5≧ | Blue/0.5≧ | 0.5≧ |
| Example 4 | Blue/2.5≧ | Blue/1.5≧ | Blue/0.5≧ | 0.5≧ |
| Example 5 | Blue/2.5≧ | Blue/1.5≧ | Blue/0.5≧ | 0.5≧ |
| Example 6 | Blue/2.5≧ | Blue/1.5≧ | Blue/0.5≧ | 0.5≧ |
| Comparative Example 2 | Blue/2.5≧ | Blue/1.5≧ | Yellow/1.5≦ | 1.5 |
| Comparative Example 3 | Blue/2.5≧ | Yellow-green/ 2.0-2.5 | Yellow/1.5≦ | 2.0-2.5 |
| Comparative Example 4 | Blue/2.5≧ | Green/2.0 | Yellow/1.5≦ | 2.0 |

| | | | | |
|---|---|---|---|---|
| *Reference Example | | | | |

As shown in Table 2, in the deoxidization test of the model oil prepared by adding a fixed amount of the Deoxidizing agent and stirring for 1 minute, the acid value of the oil having an acid value of 2.5 was reduced to 0.5 or less in Examples 1, 2 and 4 to 6 whereas the acid value of the oil was reduced to 1.5 or more in Comparative Examples 2 to 4. The deoxidizing agent of the present invention (in Examples 4 to 6) exhibited a greater deoxidizing effect by stirring.

### Deoxidizing test-3 deoxidization of used shortening oil

Right after a predetermined amount of the deoxidizing agent sample was added to 50 g of an used shortening oil heated up to 150°C (acid value ≒ 7.0) and stirred at 150°C for 15 minutes, the resulting mixture was filtered. The acid value of the regenerated oil obtained by filtration was measured with the AV Tester Simple Pack. The regenerated oil having an acid value of 3.5 or more when measured with the AV3 tester was diluted with an unused shortening oil again to measure the acid value of the diluted oil. The test results are shown in Table 3.

**Table 3**

| | No addition | Example 5 | Comparative Example 3 | Comparative Example 4 |
|---|---|---|---|---|
| Dilution factor | X1 | X1 | X1 | X1 |
| AV3 tester color/ judgment | Yellow/3.5≦ | Blue/2.5≧ | Yellow/3.5≦ | Yellow/3.5≦ |
| AV2 tester color/ judgment | Yellow/2.5≦ | Blue/1.5≧ | Yellow/2.5≦ | Yellow/2.5≦ |
| AV1 tester color/ judgment | Yellow/1.5≦ | Blue/0.5≧ | Yellow/1.5≦ | Yellow/1.5≦ |
| Acid value before dilution | 3.5≦ | 0.5≧ | 3.5≦ | 3.5≦ |
| Dilution factor | X2 | | X2 | X2 |
| AV3 tester color/ Judgment | Yellow/3.5≦ | | Blue/2.5≧ | Blue/2.5≧ |
| AV2 tester color/ Judgment | Yellow/2.5≦ | | Yellow/2.5≦ | Blue/1.5≧ |
| AV1 tester color/ Judgment | Yellow/1.5≦ | | Yellow/1.5≦ | Yellow/1.5≦ |
| X2 diluted acid value | 3.5≦ | | 2.5 | 1.5 |
| Dilution factor | X3 | | | |
| AV3 tester color/ Judgment | Blue/2.5≧ | | | |
| AV2 tester color/ Judgment | Yellow-green/ 2.0-2.5 | | | |
| AV1 tester color/ Judgment | Yellow/1.5≦ | | | |
| X3 diluted acid value | 2.0-2.5 | | | |
| Acid value in terms of original oil | 7.0 | 0.5≧ | 5.0 | 3.0 |

As shown in Table 3, the deoxidizing agent of the present invention exhibited an excellent deoxidizing effect even for an oil having a very large acid value.

### Effect of the Invention

Since the deoxidizing agent for edible oils of the present invention has extremely excellent deoxidizing capability, the same deoxidizing effect as that of a conventional deoxidizing agent can be obtained with a small amount thereof.

Since the carbonate group-containing magnesium hydroxide particles (or baked particles thereof) for use in the present invention have excellent granulating property, a granulated product thereof can be easily produced without adding a binder. Since this granulated product does not collapse by baking and not powder in an edible oil, it has a high filtration rate after the deoxidization of an edible oil and excellent work efficiency.

According to the method of regenerating an edible oil of the present invention, the acid value of an used edible oil can be reduced efficiently to regenerate the edible oil.

The deoxidizing agent of the present invention can be expected to have a great deoxidizing effect for lubricant oil and crude oil.

### Industrial Applicability

The deoxidizing agent for edible oils of the present invention can be used to regenerate an edible oil.

## Claims

1. A deoxidizing agent for edible oils having an average particle diameter of 50 to 1,000 µm and comprising granulated particle,
wherein the granulated particle is obtained by granulating carbonate group-containing magnesium hydroxide particles or baked particles thereof,
wherein the carbonate group-containing magnesium hydroxide particles are represented by the following formula (1) and have a BET specific surface area of 80 to 400 m²/g:
Mg(OH)₂₋ₓ(CO₃)_{0.5x} · mH₂O (1)
wherein x satisfies 0.02 ≦ x ≦ 0.7 and
m satisfies 0 ≦ m ≦ 1.

2. The deoxidizing agent for edible oils according to claim 1, wherein the baking temperature of the baked particles is 350 to 900°C.

3. The deoxidizing agent for edible oils according to claim 1, wherein the baking temperature of the baked particles is 400 to 800° C.

4. The deoxidizing agent for edible oils according to claim 1, wherein the BET specific surface area of the baked particles is 30 to 500 m²g.

5. The deoxidizing agent for edible oils according to claim 1, wherein the BET specific surface area of the baked particles is 100 to 400 m²/g.

6. The deoxidizing agent for edible oils according to claim 1, wherein the granulated particle further comprises at least one compound selected from the group consisting of calcium oxide, calcium hydroxide, calcium silicate, magnesium oxide, magnesium hydroxide and magnesium silicate.

7. The deoxidizing agent for edible oils according to claim 1, wherein the granulated particle further comprises a decoloring agent.

8. The deoxidising agent for edible oils according to claim 7, wherein the decoloring agent is at least one compound selected from the group consisting of silicon dioxide, acid earth, activated earth, aluminum silicate, aluminium hydroxide and activated carbon.

9. A method of regenerating an used edible oil, comprising bringing the used edible oil into contact with the deoxidizing agent for edible oils of claims 1 to 8 at 200°C or lower.

10. Use of the deoxidizing agent for edible oils of claim 1 to regenerate an edible oil.

## Patentansprüche

1. Desoxidationsmittel für Speiseöle, das einen durchschnittlichen Teilchendurchmesser von 50 bis 1000 µm aufweist und granulierte Teilchen umfasst,
wobei die granulierten Teilchen durch Granulation von Carbonatgruppen enthaltenden Magnesiumhydroxid-Teilchen oder daraus erhaltenen gebrannten Teilchen erhalten werden,
wobei die Carbonatgruppen enthaltenden Magnesiumhydroxid-Teilchen durch die folgende allgemeine Formel (1) wiedergegeben werden und eine spezifische BET-Oberfläche von 80 bis 400 m²/g aufweisen:
Mg(OH)₂₋ₓ(CO₃)_{0,5x}•mH₂O (1),
wobei x die Beziehung 0,02 ≤ x ≤ 0,7 erfüllt und
m die Beziehung 0 ≤ m ≤ 1 erfüllt.

2. Desoxidationsmittel für Speiseöle nach Anspruch 1, wobei die Brenntemperatur der gebrannten Teilchen 350 bis 900 °C beträgt.

3. Desoxidationsmittel für Speiseöle nach Anspruch 1, wobei die Brenntemperatur der gebrannten Teilchen 400 bis 800 °C beträgt.

4. Desoxidationsmittel für Speiseöle nach Anspruch 1, wobei die spezifische BET-Oberfläche der gebrannten Teilchen 30 bis 500 m²/g beträgt.

5. Desoxidationsmittel für Speiseöle nach Anspruch 1, wobei die spezifische BET-Oberfläche der gebrannten Teilchen 100 bis 400 m²/g beträgt.

6. Desoxidationsmittel für Speiseöle nach Anspruch 1, wobei die granulierten Teilchen ferner mindestens eine Verbindung umfassen, die aus der Gruppe ausgewählt ist, die aus Calciumoxid, Calciumhydroxid, Calciumsilicat, Magnesiumoxid, Magnesiumhydroxid und Magnesiumsilicat besteht.

7. Desoxidationsmittel für Speiseöle nach Anspruch 1, wobei die granulierten Teilchen ferner ein Entfärbungsmittel umfassen.

8. Desoxidationsmittel für Speiseöle nach Anspruch 7, wobei es sich beim Entfärbungsmittel um mindestens eine Verbindung handelt, die aus der Gruppe ausgewählt ist,
die aus Siliciumdioxid, saurer Erde, aktivierter Erde, Aluminiumsilicat, Aluminiumhydroxid und Aktivkohle besteht.

9. Verfahren zur Regeneration von gebrauchtem Speiseöl, umfassend das Kontaktieren des gebrauchten Speiseöls mit dem Desoxidationsmittel für Speiseöle nach den Ansprüchen 1 bis 8 bei 200 °C oder darunter.

10. Verwendung des Desoxidationsmittels für Speiseöle nach Anspruch 1 zur Regeneration eines Speiseöls.

## Revendications

1. Agent de désoxydation pour huiles alimentaires, comprenant des particules formées par granulation, présentant un diamètre moyen de particules valant de 50 à 1000 µm,
pour lequel les particules formées par granulation ont été obtenues par granulation de particules d'hydroxyde de magnésium comportant des groupes carbonate ou de telles particules cuites,
étant entendu que ces particules d'hydroxyde de magnésium comportant des groupes carbonate correspondent à la formule (1) donnée ci-dessous et présentent une aire spécifique BET de 80 à 400 m²/g ;
formule (1) : Mg(OH)₂₋ₓ(CO₃)_{0,5x} • mH₂O
dans laquelle x satisfait la relation 0,02 ≤ x ≤ 0,7 et m satisfait la relation 0 ≤ m ≤ 1.

2. Agent de désoxydation pour huiles alimentaires, conforme à la revendication 1, dans lequel la température de cuisson des particules cuites vaut de 350 à 900 °C.

3. Agent de désoxydation pour huiles alimentaires, conforme à la revendication 1, dans lequel la température de cuisson des particules cuites vaut de 400 à 800 °C.

4. Agent de désoxydation pour huiles alimentaires, conforme à la revendication 1, dans lequel l'aire spécifique BET des particules cuites vaut de 30 à 500 m²/g.

5. Agent de désoxydation pour huiles alimentaires, conforme à la revendication 1, dans lequel l'aire spécifique BET des particules cuites vaut de 100 à 400 m²/g.

6. Agent de désoxydation pour huiles alimentaires, conforme à la revendication 1, dans lequel les particules formées par granulation comprennent en outre au moins un composé choisi dans l'ensemble constitué par les oxyde de calcium, hydroxyde de calcium, silicate de calcium, oxyde de magnésium, hydroxyde de magnésium, et silicate de magnésium.

7. Agent de désoxydation pour huiles alimentaires, conforme à la revendication 1, dans lequel les particules formées par granulation comprennent en outre un agent décolorant.

8. Agent de désoxydation pour huiles alimentaires, conforme à la revendication 7, dans lequel l'agent décolorant est au moins un composé choisi dans l'ensemble constitué par les dioxyde de silicium, terre acide, terre activée, silicate d'aluminium, hydroxyde d'aluminium et charbon actif.

9. Procédé de régénération d'une huile alimentaire usée, comportant le fait de mettre l'huile alimentaire usée en contact avec un agent de désoxydation pour huiles alimentaires, conforme à l'une des revendications 1 à 8, à une température de 200 °C ou moins.

10. Utilisation d'un agent de désoxydation pour huiles alimentaires, conforme à la revendication 1, pour régénérer une huile alimentaire.
